# EUROPÄISCHE PATENTSCHRIFT

(11) **EP 1 714 995 B1**
(45) Veröffentlichungstag und Bekanntmachung des Hinweises auf die Patenterteilung: **27.06.2007**
(21) Anmeldenummer: 06006800.4
(22) Anmeldetag: 30.03.2006
(51) Int. Cl.: C08G 77/04

(54) **Verfahren zur Herstellung von Silanolgruppen aufweisenden Organopolysiloxanen**
Process for the production of silanol containing organopolysiloxanes
Méthode de preparation des organopolysiloxanes comprenant des groupes silanol

(30) Priorität: 21.04.2005 DE 102005018628
(43) Veröffentlichungstag der Anmeldung: 25.10.2006
(73) Patentinhaber: Wacker Chemie AG, 81737 München (DE)
(72) Erfinder: Ochs, Christian Dr., 84489 Burghausen (DE)
(74) Vertreter: Deffner-Lehner, Maria

(56) Entgegenhaltungen:
- DE-B- 1 246 251
- US-A- 3 328 448
- US-A- 3 504 006
- US-A- 5 639 844
- BARNES G H ET AL: "The Preparation of Organosilanols via Metal-Catalyzed Reaction of Organosilicon Hydrides with Water" JOURNAL OF ORGANIC CHEMISTRY, AMERICAN CHEMICAL SOCIETY. EASTON, US, Bd. 31, 1966, Seiten 885-887, XP002382361 ISSN: 0022-3263

## Beschreibung

Die Erfindung betrifft ein Verfahren zur Herstellung von Silanolgruppen aufweisenden Organopolysiloxanen, insbesondere von linearen, mit lateralen Silanolgruppen funktionalisierten Organopolysiloxanen.

Wie allgemein bekannt ist, lassen sich Silanolgruppen im einfachsten Fall durch die wässrige Hydrolyse von SiCl-haltigen Organosiliciumverbindungen herstellen. Während es im Falle der monomeren Silane verhältnismässig einfach ist, auf diese Weise definierte Silanole zu erhalten und in Reinform zu isolieren, gestaltet sich die analoge Umsetzung zur Synthese polymerer Organosiliciumverbindungen, insbesondere solcher mit lateraler Silanolfunktionalisierung, wesentlich schwieriger. Zwar ist es prinzipiell möglich, durch Cohydrolyse von Gemischen bestehend aus Dialkyldichlorsilanen und Alkyltrichlorsilanen sowie gegebenenfalls Trialkylchlorsilanen zu lateral mit Silanolgruppen funktionalisierten Polymeren zu gelangen. Bei den Produkten handelt es sich jedoch nicht um definierte Verbindungen mit einheitlicher Struktur, sondern vielmehr um ein statistisches Gemisch aus mehr oder weniger stark verzweigten Hydrolyseprodukten, welche in untergeordnetem Maße auch seitenständige Silanolgruppen aufweisen. Eine gezielte Synthese von Organopolysiloxanen mit lateralen Silanolgruppen ist daher auf diese Weise nicht möglich.

Eine weitere Möglichkeit zur Synthese von Silanolgruppen enthaltenden Organopolysiloxanen stellt die sauer oder basisch katalysierte Hydrolyse von SiH-funktionellen Siloxanen dar. Dem Fachmann ist jedoch bekannt, dass sich auch auf diese Art und Weise kaum definierte Verbindungen mit einheitlicher Struktur erhalten lassen, da der Reaktionsverlauf nicht spezifisch ist.

Vielmehr finden parallel zur gewünschten Bildung der Silanolgruppen als Nebenreaktionen die Dehydrokondensation von bereits gebildeten Silanolgruppen mit noch vorhandenen SiH-Gruppen, Equilibrierungen und Fragmentierungen der Polymerhauptkette des Edukts sowie die ebenfalls durch Säuren oder Basen katalysierte Kondensation von Silanolgruppen statt. Als Ergebnis wird daher ein statistisches Gemisch aus mehr oder weniger stark verzweigten und teilverbrückten Polymeren erhalten.

Die klassischen Hydrolyseprozesse sind somit nicht dazu geeignet, lateral mit Silanolgruppen funktionalisierte Organopolysiloxane selektiv aufzubauen.

Es bestand die Aufgabe, ein Verfahren bereitzustellen, das die oben genannten Nachteile nicht aufweist und welches die selektive Synthese von lateral mit Silanolgruppen funktionalisierten Organopolysiloxanen erlaubt. Die Aufgabe wird durch die Erfindung gelöst.

Gegenstand der Erfindung ist ein Verfahren gemäß Anspruch 1 Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest und der Phenylrest besonders bevorzugt sind.

Beispiele für Reste R' sind die für Rest R genannten Beispiele. Bevorzugt handelt es sich bei Rest R' um einen Alkylrest mit 1 bis 8 Kohlenstoffatomen, der gegebenenfalls durch ein oder mehrere voneinander separate Ethersauerstoffatome unterbrochen sein kann. Besonders bevorzugt sind der Methyl-, Ethyl-, Propyl-, Butyl und 2-Ethoxyethylrest, insbesondere der Methyl-, Ethyl- und Propylrest.

Als SiH-Gruppen aufweisende Organosiliciumverbindungen (A) werden solche der allgemeinen Formel 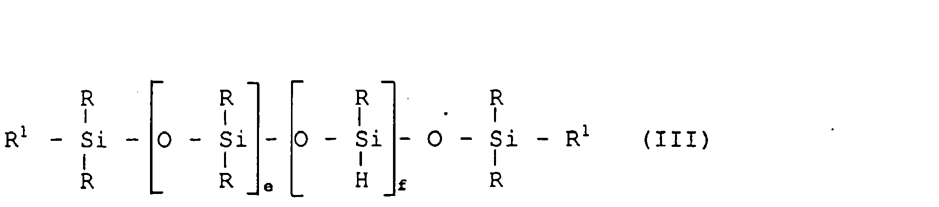 wobei
e eine ganze Zahl von 80 bis 1000, vorzugsweise 80 bis 500, bevorzugt 100 bis 200, ist,
f eine ganze Zahl von 1 bis 200, vorzugsweise 1 bis 60, bevorzugt 1 bis 16, besonders bevorzugt 1 bis 6, ist,
R¹ ein Wasserstoffatom oder R bedeutet, und
R die oben dafür genannte Bedeutung besitzt,
eingesetzt.

Die bevorzugt verwendeten Organopolysiloxane der allgemeinen Formel (III) besitzen vorzugsweise eine durchschnittliche Viskosität von 10 bis 100.000 mm²/s, bevorzugt 25 bis 10.000 mm²/s, besonders bevorzugt 50 bis 1.000 mm²/s, bei 25 °C.

Die verwendeten Organopolysiloxane (A) sind handelsübliche Produkte bzw. können nach in der Silicon-Chemie gängigen Verfahren hergestellt werden.

Bei den als Komponente (B) eingesetzten Metallen der VIII. Nebengruppe des Periodensystems bzw. deren Verbindungen, handelt es sich vorzugsweise um Metalle der Platingruppe bzw. deren Verbindungen, bevorzugt um Ru, Rh, Ir, Pd und Pt bzw. deren Verbindungen.

Gemäß dem erfindungsgemäßen Verfahren können die Katalysatoren (B) als Feststoffe, als Lösungen in Wasser oder gelöst in beliebigen organischen Lösungsmitteln, oder an Trägermaterialien gebunden eingesetzt werden. Bevorzugt sind an Trägermaterialien gebundene Katalysatoren (B).

Als Trägermaterial eignen sich prinzipiell alle bisher nach dem Stand der Technik für diesen Zweck eingesetzten anorganischen oder organischen Polymere, wie z. B. SiO₂, Al₂O₃, Tonerden, Aktivkohle oder organische Harze. Vorzugsweise handelt es sich bei dem Katalysator-Trägermaterial um Aktivkohle oder Al₂O₃, wobei als Komponente (B) Palladium/Aktivkohle, Palladium/Al₂O₃ und Ruthenium/Aktivkohle, insbesondere Palladium/Aktivkohle bevorzugt ist.

Die Menge des eingesetzten Katalysators (B) richtet sich nach der Anzahl der im Organopolysiloxan (A) enthaltenen SiH-Gruppen. Vorzugsweise wird Katalysator (B) in Mengen von 10 bis 10000 ppm, bevorzugt 20 bis 1000 ppm, besonders bevorzugt 50 bis 500 ppm, berechnet als metallisches Element und bezogen auf das Gesamtgewicht der eingesetzten Organopolysiloxane (A), eingesetzt.

Die verwendeten Katalysatoren (B) sind handelsübliche Produkte bzw. können nach in der metallorganischen Chemie gängigen Verfahren hergestellt werden.

Vorzugsweise wird der an ein Trägermaterial gebundene Katalysator nach beendeter Umsetzung oder am Ende des erfindungsgemäßen Verfahrens durch Filtration wieder entfernt und gegebenenfalls erneut eingesetzt oder rezyklisiert.

Bei den im erfindungsgemäßen Verfahren verwendeten Cokatalysatoren (K) handelt es sich um protonische oder hydridische Verbindungen gemäß Anspruch 1. Beispiele für geeignete Cokatalysatoren (K) sind organische Säuren, wie Ameisensäure, Essigsäure, Oxalsäure, Zitronensäure und Ascorbinsäure, sowie niedermolekulare siliciumorganische Hydride, wie Trimethylsilan, Triethylsilan und Tetramethyldisiloxan.

Bevorzugte Cokatalysatoren (K) sind Ameisensäure, Essigsäure, Oxalsäure, Zitronensäure, Ascorbinsäure, Triethylsilan und Tetramethyldisiloxan, wobei Ameisensäure, Oxalsäure, Ascorbinsäure, Triethylsilan und Tetramethyldisiloxan bevorzugt, Ameisensäure, Triethylsilan und Tetramethyldisiloxan besonders bevorzugt sind.

Die Menge des eingesetzten Cokatalysators (K) richtet sich nach der Menge des verwendeten Katalysators (B). Vorzugsweise wird Cokatalysator (K) in Mengen von 25 bis 1000 mol%, bevorzugt 50 bis 500 mol%, besonders bevorzugt 100 bis 250 mol%, bezogen auf 100 mol% metallisches Element im eingesetzten Katalysator (B), verwendet.

Bei dem erfindungsgemäßen Verfahren werden Cokatalysatoren (K) mitverwendet. Vorzugsweise werden Cokatalysatoren (K) mitverwendet, wenn als Organopolysiloxane (A) solche der allgemeinen Formel (III) mit R¹ in der Bedeutung von R eingesetzt werden, da hierdurch die Reaktionsdauer erheblich verkürzt werden kann, insbesondere wenn nieder-SiH-funktionelle Verbindungen der allgemeinen Formel (III) eingesetzt werden.

Im erfindungsgemäßen Verfahren kann als Komponente (C) beliebiges Wasser eingesetzt werden, wobei vollentsalztes Wasser, destilliertes Wasser und gereinigtes Wasser (Aqua purificata) bevorzugt sind, vollentsalztes Wasser besonders bevorzugt ist.

Die Menge der eingesetzten Komponente (C) richtet sich nach der Anzahl der im Organopolysiloxan (A) enthaltenen SiH-Gruppen. Vorzugsweise wird Komponente (C) äquimolar oder im Überschuss bezüglich der im Organopolysiloxan (A) enthaltenen SiH-Gruppen verwendet.

Bevorzugt beträgt die eingesetzte Wassermenge 100 bis 200 mol-%, besonders bevorzugt 100 bis 150 mol-%, insbesondere 100 bis 120 mol-%, je 100 mol-% der im Organopolysiloxan (A) enthaltenen SiH-Gruppen.

Als Silanolgruppen aufweisende Organosiliciumverbindungen werden solche der allgemeinen Formel 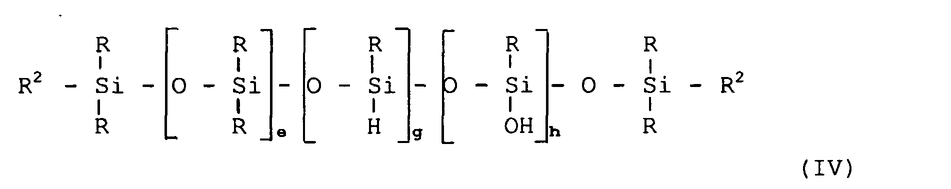 wobei
R² R oder eine OH-Gruppe bedeutet,
g gleich 0 bis 199, bevorzugt 0 bis 59, besonders bevorzugt 0 bis 5, insbesondere 0, ist,
h gleich 1 bis 200, bevorzugt 1 bis 60, besonders bevorzugt 1 bis 6, ist,
mit der Maßgabe, dass die Summe g+h = f ist, und
R, e und f die oben dafür angegebene Bedeutung haben,
erhalten.

Die erfindungsgemäß bevorzugt erhaltenen Organopolysiloxane der allgemeinen Formel (IV) besitzen vorzugsweise eine durchschnittliche Viskosität von 10 bis 100.000 mm²/s, bevorzugt 25 bis 10.000 mm²/s, besonders bevorzugt 50 bis 1.000 mm²/s, bei 25 °C.

Im Rahmen dieser Erfindung sollen die allgemeinen Formeln (III) und (IV) so verstanden werden, dass die jeweils genannten Einheiten mit den Indices e und f in der Formel (III) bzw. e, g und h in der Formel (IV) in beliebiger Weise, beispielsweise als Block oder statistisch, im Organopolysiloxanmolekül verteilt sein können.

Gemäß dem erfindungsgemäßen Verfahren wird die Reaktion in einem Temperaturbereich von vorzugsweise -10°C bis +150°C, bevorzugt +10°C bis +100°C, besonders bevorzugt +25°C bis +80°C, durchgeführt.

Das erfindungsgemäße Verfahren kann, beispielsweise zur Homogenisierung oder zur Erniedrigung der Viskosität des Reaktionsgemisches, mit oder ohne Lösungsmittel (E) durchgeführt werden, wobei die Anwesenheit von Lösungsmittel bevorzugt ist.

Falls Lösungsmittel (E) zugegen ist, so handelt es sich vorzugsweise um polare, organische Lösungsmittel, welche die Verträglichkeit von Wasser gegenüber der Organopolysiloxan-Phase erhöhen, selbst aber nicht mit dem in den Organosiliciumverbindungen (A) enthaltenen SiH-Gruppen sowie mit den im Reaktionsprodukt (D) enthaltenen SiOH-Gruppen reagieren. Beispiele für geeignete Lösungsmittel sind Tetrahydrofuran, Dioxan, Dimethoxyethan, wobei Tetrahydrofuran oder Dioxan bevorzugt sind.

Falls Lösungsmittel (E) verwendet wird, so handelt es sich vorzugsweise um Mengen von 1 bis 500 Gew.-Teile, bevorzugt 5 bis 200 Gew.-Teile, besonders bevorzugt 10 bis 100 Gew.-Teile, je 100 Gew.-Teile der eingesetzten Organopolysiloxans (A).

Bei den erfindungsgemäß eingesetzten Komponenten (A), (B) und gegebenenfalls (K) und gegebenenfalls (E) kann es sich jeweils um eine Art der Komponente wie auch um ein Gemisch aus mindestens zwei Arten der jeweiligen Komponente handeln.

Ferner können bei dem erfindungsgemäßen Verfahren weitere Stoffe (H), die an der Umsetzung nicht direkt teilnehmen und die den Reaktionsverlauf nicht negativ beeinflussen, eingesetzt werden.

Beispiele für solche weiteren Stoffe (H) sind Emulgatoren, Phasentransferkatalysatoren, Konservierungsstoffe, antimikrobiell wirksame Substanzen, wie z.B. Bakterizide, Fungizide oder Algizide, Geruchsstoffe, geruchshemmende oder geruchsvermindernde Stoffe, Entschäumer, Rheologieregler, Farbstoffe, Pigmente, Redoxstabilisatoren, flammabweisbar machende Stoffe, Lichtschutzmittel und Hitzestabilisatoren. Bevorzugt werden bei dem erfindungsgemäßen Verfahren keine weiteren Stoffe (H) eingesetzt.

Des weiteren kann das erfindungsgemäße Verfahren als homogene 1-Phasenreaktion, als Mehrphasenreaktion oder in Dispersion, wie z.B. Micro- oder Macro-Emulsion, durchgeführt werden. Bevorzugt ist die Durchführung als homogene 1-Phasenreaktion.

Wird das Verfahren als 2-Phasen-Reaktion durchgeführt, was nicht bevorzugt ist, so ist eine möglichst gute Homogenisierung der nicht miteinander mischbaren Phasen und die Schaffung einer großen inneren Reaktionsfläche zu gewährleisten, wie z.B. durch Erzeugen einer durchschnittlichen Teilchengröße von < 500 µm. Die intensive Durchmischung der Reaktionsphasen kann prinzipiell mit allen nach dem Stand der Technik bekannten Mischsystemen, wie z.B. Rührwerken aller Art, Hochgeschwindigkeitsrührwerken, wie z.B. solche erhältlich unter der Marke Ultra-Turrax^{®} oder ähnliches Dissolversystem, mittels Ultraschallsonden oder -bädern, oder - wie z.B. bei kontinuierlicher Reaktionsführung - mit statischen oder bewegten Mischelementen, erfolgen.

Wird das Verfahren in Dispersion durchgeführt, was ebenfalls nicht bevorzugt ist, so können entsprechend Emulgatoren bzw. oberflächenaktive Mittel, wie etwa nichtionische, anionische, kationische oder amphotere Emulgatoren, vorhanden sein, wobei die Herstellung der Dispersion in beliebiger und dem Fachmann bekannter Art und Weise erfolgen kann.

Bei dem erfindungsgemäßen Verfahren werden die eingesetzten Komponenten auf an sich bekannte Art und Weise miteinander vermischt und reagieren gelassen.

Die erfindungsgemäß eingesetzten Komponenten können hierbei in beliebiger Reihenfolge miteinander vermischt, der Reaktion zugeführt und/oder zur Reaktion gebracht werden. Bei einem sehr exothermen Reaktionsverlauf ist jedoch ein Zudosieren der Komponente (C), gegebenenfalls im Gemisch mit der Komponente (E), zu einem Gemisch bestehend aus den Komponenten (A), (B), ggf. (K) und gegebenenfalls (E) sowie gegebenenfalls (H) bevorzugt.

Das erfindungsgemäße Verfahren wird vorzugsweise bei einem Druck der umgebenden Atmosphäre, also etwa bei 900 bis 1100 hPa, durchgeführt, es kann aber auch bei höheren und niedrigeren Drücken durchgeführt werden.

Das erfindungsgemäße Verfahren kann absatzweise, halbkontinuierlich oder vollkontinuierlich in dafür geeigneten Reaktorsystemen, wie z.B. Batch-Reaktor, Batch-Reaktor-Kaskade, Loop-Reaktor, Strömungsrohr, Rohrreaktor, Microreaktor, Kreiselpumpen und beliebige Kombinationen hiervon, durchgeführt werden.

Nach Beendigung der erfindungsgemäßen Umsetzung können die erhaltenen Reaktionsprodukte nach beliebigen und bisher bekannten Verfahrensschritten gereinigt und/oder isoliert werden. Falls erwünscht, können nach der Umsetzung beispielsweise flüchtige Komponenten und gegebenenfalls eingesetztes Lösungsmittel durch Destillation, gegebenenfalls unter vermindertem Druck, sowie der an ein Trägermaterial gebundene Katalysator durch Filtration entfernt werden.

An das erfindungsgemäße Verfahren können sich darüber hinaus beliebige weitere Prozessschritte anschließen, mittels derer die gewünschten Eigenschaften der nach dem erfindungsgemäßen Verfahren erhaltenen Organosiliciumverbindungen gezielt eingestellt werden können. Die Durchführung der Prozessschritte orientiert sich dabei grundsätzlich am Stand der Technik und erfolgt in der dem Fachmann bekannten Art und Weise.

Das erfindungsgemäße Verfahren hat den Vorteil, dass es einfach und kostengünstig in der Durchführung ist.

Besonderer Vorteil des erfindungsgemäßen Verfahrens ist, dass es quantitativ, äußerst selektiv und nahezu ohne Nebenreaktionen verläuft. Die gewünschten, mit Silanolgruppen funktionalisierten Organosiliciumverbindungen werden daher mit guter Ausbeute und in hoher Reinheit erhalten.

Ein weiterer Vorteil des erfindungsgemäßen Verfahrens ist, dass der eingesetzte Katalysator (B) auf einfache Art und Weise durch Filtration nahezu vollständig entfernt werden kann, und somit keine unerwünschten Katalysatormengen im Reaktionsprodukt verbleiben. Darüber hinaus kann der zurückgewonnene Katalysator aufgearbeitet, wiederverwendet und/oder dem Wertstoffkreislauf wieder zugeführt werden. Das erfindungsgemäße Verfahren ist demnach nachhaltig umweltverträglich und ressourcensparend.

Das erfindungsgemäße Verfahren hat des Weiteren den Vorteil, dass es universell einsetzbar ist, und sowohl für eine kontinuierliche wie diskontinuierliche Prozessführung gleichermaßen geeignet ist.

Ferner besitzt das erfindungsgemäße Verfahren den Vorteil, dass es auf eine Vielzahl von SiH-funktionellen Organosiliciumverbindungen anwendbar ist, wie z.B. auf Organopolysiloxane und Organosiliconharze.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Vergleichsversuch 1

2 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,085 % und einer Viskosität von 95 mm²/s, werden in 70 g Tetrahydrofuran gelöst und mit 0,25 g Palladium/Aktivkohle (Pd/C, 10 Gew.-% Palladium) versetzt. Man heizt auf 70 °C auf und rührt 5 Stunden bei dieser Temperatur, wobei Wasserstoffentwicklung stattfindet. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 130 mm²/s und einem Silanolgruppengehalt von 84,9 mmol/100g. Die NMR-spektroskopische Untersuchung belegt die quantitative Bildung von lateral an die Siloxanhauptkette gebundenen Silanolgruppen (29 Si-NMR: δ= ca. -56 bis -58 ppm).

### Beispiel 2

4,6 g Wasser und 400 g eines linearen Siloxans, bestehend aus Trimethylsiloxy-, Dimethylsiloxy- und Hydrogenmethylsiloxy-Einheiten mit einem Aktivwasserstoffgehalt von 0,051 % und einer Viskosität von 250 mm²/s, werden in 280 g Tetrahydrofuran gelöst und mit 1,04 g Palladium/Aktivkohle (Pd/C, 10 Gew.-% Palladium) sowie 0,104 g Triethylsilan versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stunde bei 30 °C nach, heizt anschließend auf Rückflusstemperatur (ca. 70 °C) auf und lässt weitere 4 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 290 mm²/s und einem Silanolgruppengehalt von 50,9 mmol/100g. Die NMR-spektroskopische Untersuchung belegt die quantitative Bildung von lateral an die Siloxanhauptkette gebundenen Silanolgruppen.

### Vergleichsversuch 3

13,4 g Wasser und 625 g eines linearen Siloxans, bestehend aus Hydrogendimethylsiloxy-, Dimethylsiloxy- und Hydrogenmethylsiloxy-Einheiten mit einem Aktivwasserstoffgehalt von 0,084 % und einer Viskosität von 230 mm²/s, werden in 560 g Tetrahydrofuran gelöst und mit 2,09 g Palladium/Aktivkohle (Pd/C, 10 Gew.-% Palladium) versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stunde bei 30 °C nach, heizt anschließend auf Rückflusstemperatur (ca. 70 °C) auf und lässt weitere 2 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 285 mm²/s und einem Silanolgruppengehalt von 84,1 mmol/100g. Die NMR-spektroskopische Untersuchung belegt die quantitative Bildung von endständig und lateral an die Siloxanhauptkette gebundenen Silanolgruppen.

### Beispiel 4

5,3 g Wasser und 250 g eines linearen Siloxans, bestehend aus Hydrogendimethylsiloxy-, Dimethylsiloxy- und Hydrogenmethylsiloxy-Einheiten mit einem Aktivwasserstoffgehalt von 0,084 % und einer Viskosität von 230 mm²/s, werden in 225 g Tetrahydrofuran gelöst und mit 0,85 g Palladium/Aktivkohle (Pd/C, 10 Gew.-% Palladium) sowie 37 mg Ameisensäure versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stunde bei 30 °C nach, heizt anschließend auf Rückflusstemperatur (ca. 70 °C) auf und lässt weitere 2 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 294 mm²/s und einem Silanolgruppengehalt von 84,0 mmol/100g. Die NMR-spektroskopische Untersuchung belegt die quantitative Bildung von endständig und lateral an die Siloxanhauptkette gebundenen Silanolgruppen.

### Vergleichsbeispiel 1

Man legt 725 g Wasser vor, kühlt auf etwa 0 °C ab und versetzt langsam mit einer Mischung aus 252,6 g Dimethyldichlorsilan, 2,17 g Trimethylchlorsilan und 2,99 g Methyltrichlorsilan. Nach beendeter Zugabe erwärmt man auf 30 °C und rührt eine Stunde bei dieser Temperatur nach. Anschließend wird die Siloxanphase von der Wasserphase getrennt und durch Destillation bei 100 °C im Vollvakuum von restlichen Wasserspuren, gelöster HCl und kurzkettigen, leicht flüchtigen Hydrolysatbestandteilen befreit. Man erhält ein dickflüssiges Öl mit einer Viskosität von etwa 2850 mm²/s. Die NMR-spektroskospische Untersuchung des Reaktionsproduktes belegt die Bildung eines vernetzten Polymers bestehend aus Trimethylsiloxy-, Dimethylsiloxy-, Hydroxydimethylsiloxy- und Methylsiloxyeinheiten. Die gewünschten Hydroxy-methylsiloxy-Einheiten können dagegen nur in Spuren nachgewiesen werden.

### Vergleichsbeispiel 2

110 g eines linearen Siloxans, bestehend aus Trimethylsiloxy-, Dimethylsiloxy- und Hydrogenmethylsiloxy-Einheiten mit einem Aktivwasserstoffgehalt von 0,028 % und einer Viskosität von 410 mm²/s, werden mit 25 g THF versetzt, auf 0 °C abgekühlt und bei dieser Temperatur mit 0,6 g Wasser sowie 0,121 g einer 10%igen wässrigen KOH versetzt. Man rührt 3 Stunden bei dieser Temperatur, erwärmt das Gemisch auf 60 °C und lässt weitere 2 Stunden reagieren. Anschließend werden 0,014 g Essigsäure (100 %) zugegeben und alle flüchtigen Bestandteile durch Destillation bei 100 °C im Vollvakuum entfernt. Nach Filtration erhält man ein klares farbloses Produkt mit einer Viskosität von 150 mm²/s. Die NMR-spektroskospische Untersuchung des Reaktionsproduktes belegt die Bildung eines Gemisches aus teilvernetzten Polymeren bestehend aus Trimethylsiloxy-, Hydroxydimethylsiloxy-, Dimethylsiloxy-, Methylsiloxy- und (*cyclo*-Trisiloxanyl)-dimethylsiloxyeinheiten. Die Bildung der gewünschten Hydroxy-methylsiloxy-Einheiten wird dagegen nur in untergeordnetem Maße beobachtet.

### Vergleichsbeispiel 3

110 g eines linearen Siloxans, bestehend aus Trimethylsiloxy-, Dimethylsiloxy- und Hydrogenmethylsiloxy-Einheiten mit einem Aktivwasserstoffgehalt von 0,028 % und einer Viskosität von 410 mm²/s, werden mit 25 g THF versetzt, auf 0 °C abgekühlt und bei dieser Temperatur mit 0,6 g Wasser sowie 0,08 g einer 10%igen wässrigen HCl versetzt. Man rührt 3 Stunden bei dieser Temperatur, erwärmt das Gemisch auf 60 °C und lässt weitere 2 Stunden reagieren. Anschließend werden 0,044 g Triethylamin zugegeben und alle flüchtigen Bestandteile durch Destillation bei 100 °C im Vollvakuum entfernt. Nach Filtration erhält man ein klares farbloses Produkt mit einer Viskosität von 186 mm²/s. Die NMR-spektroskospische Untersuchung des Reaktionsproduktes belegt die Bildung eines Gemisches aus teilvernetzten Polymeren bestehend aus Trimethylsiloxy-, Hydroxydimethylsiloxy-, Dimethylsiloxy- und Methylsiloxyeinheiten. Die Bildung der gewünschten Hydroxy-methylsiloxy-Einheiten wird dagegen nur in untergeordnetem Maße beobachtet.

### Beispiel 5

1,1 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,051 % und einer Viskosität von 245 mm²/s, werden in 70 g Tetrahydrofuran gelöst und mit 0,26 g Palladium/Aktivkohle (Pd/C, 10 Gew.-% Palladium) versetzt. Weiterhin wird dem Reaktionsgemisch eine equimolare Menge (bezogen auf die Menge metallischen Palladiums in der Pd/C) Cokatalysator gemäß der Tabelle zugegeben. Man rührt bei Raumtemperatur, wobei sich das Reaktionsgemisch unter Wasserstoffentwicklung langsam auf ca. 25 bis 30 °C erwärmt. Anschließend heizt man auf Rückflusstemperatur (ca. 70 °C) auf und lässt weitere 2 Stunden bei dieser Temperatur reagieren, wobei der Reaktionsumsatz bezüglich SiH NMR-spekroskopisch verfolgt wird (siehe Tabelle). Danach werden alle flüchtigen Bestandteile durch Destillation bei 80 °C im Vollvakuum entfernt und der Katalysator durch Filtration abgetrennt. Man erhält ein farbloses, klares Produkt mit lateral an die Siloxanhauptkette gebundenen Silanolgruppen.

**Tabelle:**

| | **5a** | **5b** | **5c** | **5d** | **5e** | **5f** |
|---|---|---|---|---|---|---|
| Co-katalysator | - | Ameisensäure | Essigsäure | Oxalsäure Dihydrat | Triethylsilan | 1,1,3,3-Tetramethyldisiloxan |
| Menge (mg) | - | 11,3 | 14,6 | 30,8 | 26,0 | 16,4 |
| Umsatz nach 1h / 30 °C | 34 % | 87 % | 49 % | 72 % | 62 % | 83 % |
| Umsatz nach 1h / 70 °C | 65 % | 100 % | 91 % | 100 % | 85 % | 100 % |
| Umsatz nach 2h / 70 °C | 87 % | 100 % | 98 % | 100 % | 100 % | 100 % |
| Produkt-Viskosität [mm²/s] | 305 | 315 | 310 | 314 | 316 | 318 |
| SiOH-Gehalt im Produkt [mmol/100g] | 44,3 | 51,1 | 51,0 | 50,8 | 51,0 | 50,9 |

### Beispiel 6

1,7 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,085 % und einer Viskosität von 95 mm²/s, werden in 65 g Tetrahydrofuran gelöst und mit 0,125 g Palladium/Aktivkohle (Pd/C, 10 Gew.-% Palladium) sowie 28 mg Ameisensäure versetzt. Man heizt auf 70 °C auf und rührt 3 Stunden bei dieser Temperatur, wobei Wasserstoffentwicklung stattfindet. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 126 mm²/s und einem Silanolgruppengehalt von 84,7 mmol/100g. Die NMR-spektroskopische Untersuchung belegt die quantitative Bildung von lateral an die Siloxanhauptkette gebundenen Silanolgruppen.

## Patentansprüche

1. Verfahren zur Herstellung von Silanolgruppen aufweisenden Organosiliciumverbindungen der allgemeinen
Formel 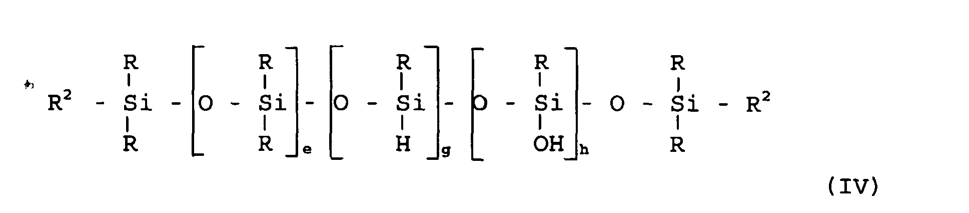 wobei
R gleich oder verschieden sein kann und einen einwertigen, SiC-gebundenen, gegebenenfalls substituierten Kohlenwasserstoffrest mit 1 bis 18 Kohlenstoffatomen bedeutet,
R² R oder eine OH-Gruppe bedeutet,
g gleich 0 bis 199 ist,
h gleich 1 bis 200 ist,
mit der Maßgabe, dass die Summe g+h = f ist und
e und f die unten dafür angegebene Bedeutung haben,
erhalten werden,
indem
Si-H Gruppen aufweisende Organsiliciumverbindungen (A) der allgemeinen Formel 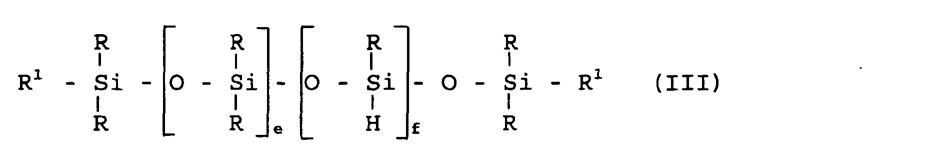 wobei
e eine ganze Zahl von 80 bis 1000 ist,
f eine ganze Zahl von 1 bis 200 ist,
R¹ ein Wasserstoffatom oder R bedeutet, und
R die oben dafür angegebene Bedeutung besitzt,
eingesetzt werden,
in Anwesenheit von Katalysatoren (B), ausgewählt aus der Gruppe der Metalle der VIII. Nebengruppe des Periodensystems und deren Verbindungen,
und in Anwesenheit von Cokatalysatoren (K) ausgewählt aus der Gruppe der organischen Säuren und niedermolekularen siliciumorganischen Hydride
mit Wasser (C)
umgesetzt werden.

2. Verfahren nach Anspruch 1, **dadurch gekennzeichnet, dass** g 0 ist.

3. Verfahren nach Anspruch 1 oder 2, **dadurch gekennzeichnet, dass** an Trägermaterialien gebundene Katalysatoren (B) eingesetzt werden.

4. Verfahren nach einem der Ansprüche 1 bis 3, **dadurch gekennzeichnet, dass** als Katalysatoren (B) solche ausgewählt aus der Gruppe von Palladium, Platin, Rhodium, Ruthenium und Iridium und deren Verbindungen eingesetzt werden.

5. Verfahren nach Anspruch 3 oder 4, **dadurch gekennzeichnet, dass** als Trägermaterialien solche ausgewählt aus der Gruppe von SiO₂, Al₂O₃, Tonerden, Aktivkohle und organischen Harzen eingesetzt werden.

6. Verfahren nach einem der Ansprüche 1 bis 5, **dadurch gekennzeichnet, dass** als Katalysator (B) an Aktivkohle gebundenes Palladium eingesetzt wird.

7. Verfahren nach einem der Ansprüche 1 bis 6, **dadurch gekennzeichnet, dass** als Cokatalysatoren (K) solche ausgewählt aus der Gruppe von Ameisensäure, Essigsäure, Oxalsäure, Zitronensäure, Ascorbinsäure, Triethylsilan und Tetramethyldisiloxan eingesetzt werden.

8. Silanolgruppen aufweisende Organosiliciumverbindungen der allgemeinen Formel 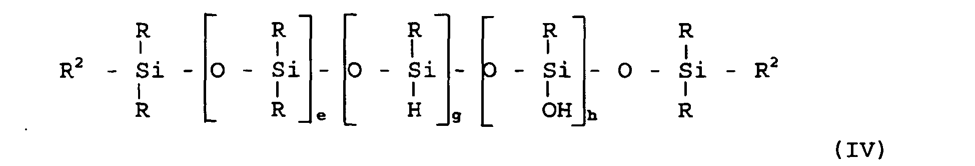 wobei
R die im Anspruch 1 dafür angegebene Bedeutung hat,
R² R oder eine OH-Gruppe bedeutet,
g gleich 0 bis 199 ist,
h gleich 1 bis 200 ist,
mit der Maßgabe, dass die Summe g+h = f ist und
e und f die im Anspruch 1 dafür angegebene Bedeutung haben.

9. Silanolgruppen aufweisende Organosiliciumverbindungen nach Anspruch 8, **dadurch gekennzeichnet, dass** g 0 ist.

## Claims

1. Process for the preparation of organosilicon compounds having silanol groups and of the general formula 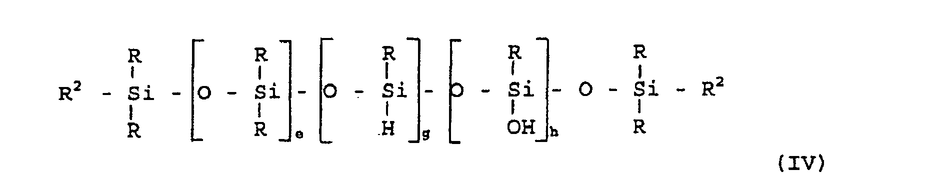 in which
R may be identical or different and are a monovalent, SiC-bonded, optionally substituted hydrocarbon radical having 1 to 18 carbon atoms,
R² is R or an OH group,
g is 0 to 199,
h is 1 to 200,
with the proviso that the sum g+h = f and e and f have the meaning stated below therefor,
by reacting
organosilicon compounds (A) having Si-H groups and of the general formula 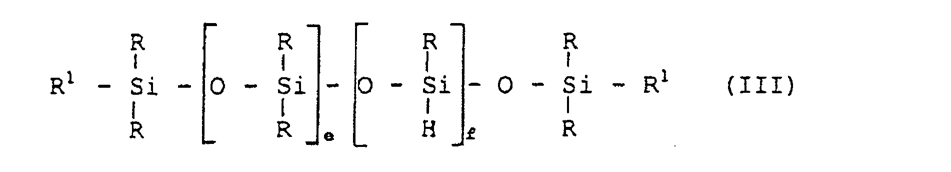 in which
e is an integer from 80 to 1000,
f is an integer from 1 to 200,
R¹ is a hydrogen atom or R and
R has the meaning stated above therefor,
in the presence of catalysts (B) selected from the group consisting of the metals of subgroup VIII of the Periodic Table of the Elements and compounds thereof and in the presence of cocatalysts (K) selected from the group consisting of the organic acids and low-molecular weight organosilicon hydrides,
with water (C).

2. Process according to Claim 1, **characterized in that** g is 0.

3. Process according to Claim 1 or 2, **characterized in that** catalysts (B) bound to support materials are used.

4. Process according to any of Claims 1 to 3, **characterized in that** catalysts (B) used are those selected from the group consisting of palladium, platinum, rhodium, ruthenium and iridium and compounds thereof.

5. Process according to Claim 3 or 4, **characterized in that** support materials used are those selected from the group consisting of SiO₂, Al₂O₃, clays, active carbon and organic resins.

6. Process according to any of Claims 1 to 5, **characterized in that** palladium bound to active carbon is used as catalyst (B).

7. Process according to any of Claims 1 to 6 **characterized in that** cocatalysts (K) used are those selected from the group consisting of formic acid, acetic acid, oxalic acid, citric acid, ascorbic acid, triethylsilane and tetramethyldisiloxane.

8. Organosilicon compounds having silanol groups and of the general formula 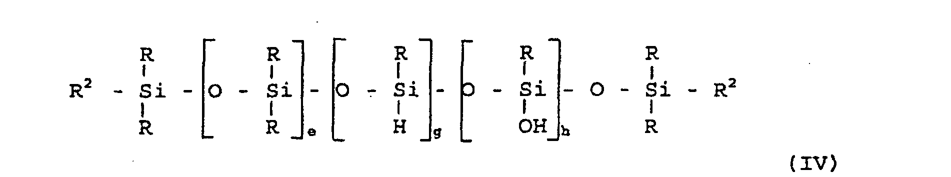 in which
R has the meaning stated therefor in Claim 1,
R² is R or an OH group,
g is from 0 to 199,
h is from 1 to 200,
with the proviso that the sum g+h is f and
e and f have the meanings stated therefor in Claim 1.

9. Organosilicon compounds having silanol groups, as claimed in Claim 8, **characterized in that** g is 0.

## Revendications

1. Procédé de préparation de composés organosiliciques présentant des groupes silanol de la formule générale 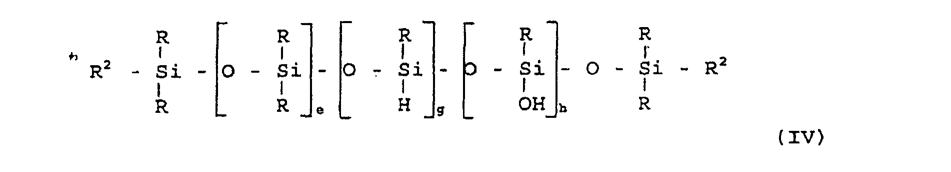 dans laquelle
R peuvent être identiques ou différents et représentent un radical hydrocarboné monovalent lié à du SiC, le cas échéant substitué et comportant de 1 à 18 atomes de carbone,
R² représente R ou un groupe OH,
g vaut de 0 à 199,
h vaut de 1 à 200,
à la condition que la somme g + h = f et que e et f aient la signification indiquée pour eux ci-après,
dans lequel
on met en oeuvre des composés organosiliciques (A) présentant des groupes Si-H, de la formule générale 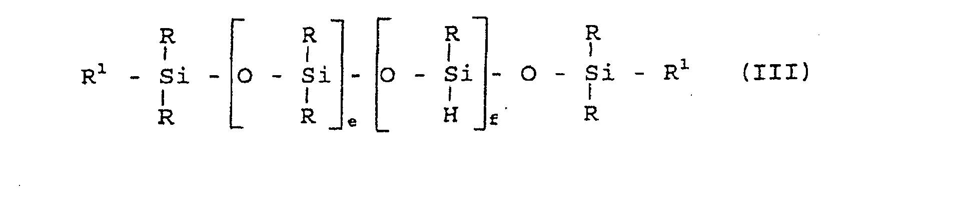 dans laquelle
e est un nombre entier de 80 à 1000,
f est un nombre entier de 1 à 200,
R¹ représente un atome d'hydrogène ou R, et
R a la signification indiquée plus haut,
et l'on fait réagir,
en présence de catalyseurs (B) choisis dans le groupe formé par les métaux du VIIIème sous-groupe du système périodique et leurs composés,
et en présence de cocatalyseurs (K) choisis dans le groupe des acides organiques et des hydrures organosiliciques à bas poids moléculaire,
avec de l'eau (C).

2. Procédé suivant la revendication 1, **caractérisé en ce que** g vaut 0.

3. Procédé suivant la revendication 1 ou 2, **caractérisé en ce que** l'on met en oeuvre des catalyseurs (B) liés à des matériaux de support.

4. Procédé suivant l'une quelconque des revendications 1 à 3, **caractérisé en ce que** l'on met en oeuvre en tant que catalyseurs (B) ceux choisis dans le groupe formé par le palladium, le platine, le rhodium, le ruthénium et l'iridium et leurs composés.

5. Procédé suivant la revendication 3 ou 4, **caractérisé en ce que** l'on met en oeuvre en tant que matériaux de support ceux choisis dans le groupe formé par SiO₂, Al₂O₃, des argiles, des charbons actifs et des résines organiques.

6. Procédé suivant l'une quelconque des revendications 1 à 5, **caractérisé en ce que** l'on met en oeuvre en tant que catalyseur (B) du palladium lié à du charbon actif.

7. Procédé suivant l'une quelconque des revendications 1 à 6, **caractérisé en ce que** l'on met en oeuvre en tant que cocatalyseurs (K) ceux choisis dans le groupe formé par l'acide formique, l'acide acétique, l'acide oxalique, l'acide citrique, l'acide ascorbique, le triéthylsilane et le tétraméthyldisiloxane.

8. Composés organosiliciques présentant des groupes silanol, de la formule générale 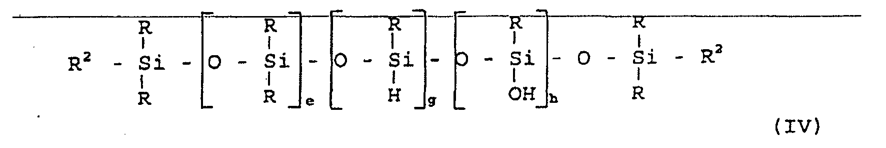 dans laquelle
R a la signification indiquée dans la revendication 1,
R² représente R ou un groupe OH,
g vaut de 0 à 199,
h vaut de 1 à 200,
à la condition que la somme g + h = f et que e et f aient les significations indiquées pour eux dans la revendication 1.

9. Composés organosiliciques présentant des groupes silanol suivant la revendication 8, **caractérisés en ce que** g vaut 0.
